Europäisches Patentamt

European Patent Office

Office européen des brevets

(11) Numéro de publication : **0 340 069 B1**

## (12) FASCICULE DE BREVET EUROPEEN

(45) Date de publication du fascicule du brevet :
**22.04.92 Bulletin 92/17**

(51) Int. Cl.$^5$ : **C01G 49/10**

(21) Numéro de dépôt : **89401037.0**

(22) Date de dépôt : **14.04.89**

(54) **Procédé de préparation du chlorure ferrique à partir d'acide chlorhydrique dilué.**

(30) Priorité : **29.04.88 FR 8805798**

(43) Date de publication de la demande :
**02.11.89 Bulletin 89/44**

(45) Mention de la délivrance du brevet :
**22.04.92 Bulletin 92/17**

(84) Etats contractants désignés :
**AT BE CH DE ES FR GB GR IT LI LU NL SE**

(56) Documents cités :
**CHEMICAL ABSTRACTS, vol. 89, no. 12, 19
septembre 1978, page 104, no. 91817y, Columbus, Ohio, US; & ES-A-455 722 (LABORATORIO
DE AGUA S.A.) 01-01-1978**

(56) Documents cités :
**CHEMICAL ABSTRACTS, vol. 100, no. 6,
février 1984, page 114, no. 36486k, Columbus,
Ohio, US; & SU-A-1 054 303 (I.KH. MARKISH et
al.) 15-11-1983
CHEMICAL ABSTRACTS, vol. 107, no. 26,
décembre 1987, page 148, no. 239316x, Columbus, Ohio, US; & JP-A-62 222 088 (OSAKA
SODA CO. LTD) 30-09-1987
CHEMICAL ABSTRACTS, vol. 82, no. 20, 19 mai
1975, page 114, no. 127078e, Columbus, Ohio,
US; & JP-A-74 113 798 (ASAHI ELECTRO-
CHEMICAL CO. LTD) 30-10-1974**

(73) Titulaire : **ATOCHEM
4 & 8, Cours Michelet La Défense 10
F-92800 Puteaux (FR)**

(72) Inventeur : **Clair, René
La Vrignoise Saint Julien
F-13500 Martigues (FR)**
Inventeur : **Gallet, Alain
11 avenue de la Durance
F-13117 Lavera (FR)**

Jouve, 18, rue Saint-Denis, 75001 PARIS

## Description

La présente invention concerne un procédé de préparation du chlorure ferrique à partir d'acide chlorhydrique dilué. Elle concerne plus particulièrement la préparation du chlorure ferrique en solution aqueuse titrant entre 35 et 45 % en poids. Cette formulation du chlorure ferrique est utilisée comme agent floculant dans le traitement des eaux. On peut se reporter au KIRK OTHMER 3ème édition, volume 24, pages 394-396 (1984) et au volume 10, page 498 (1980) où figure cette application. Le procédé le plus simple consiste à attaquer du fer par de l'acide chlorhydrique concentré, on obtient ainsi une solution à environ 36 % en poids de chlorure ferreux ($FeCl_2$) qu'on chlore pour obtenir une solution de chlorure ferrique ($FeCl_3$) titrant environ 41 % en poids et directement utilisable comme agent floculant. Cette solution à 41 % est la forme commerciale habituelle. Il est nécessaire d'obtenir une solution concentrée de $FeCl_2$ puisque le $FeCl_2$ et le $FeCl_3$ peuvent lors d'une concentration par évaporation subir une hydrolyse partielle donnant HCl. La présence d'HCl dans le $FeCl_3$ est gênante pour le traitement des eaux. Ce procédé nécessite l'utilisation d'acide chlorhydrique concentré.

Le brevet US 4.066.748 décrit un procédé à partir d'une solution de $FeCl_2$ venant d'un bain de décapage. Ce procédé oblige à concentrer le chlorure ferreux et nécessite une chloration en deux étapes.

Le brevet US 3.682.592 décrit un procédé similaire au précédent mais la solution de chlorure ferreux est mise en contact avec de l'oxygène.

On ne connait pas de procédé simple à partir d'acide dilué. Un point remarquable dans la solution d'acide chlohydrique est la concentration de l'azeotrope eau-HCl à 20,5 % en poids sous la pression atmosphérique. Pour obtenir des solutions de chlorure ferreux contenant au moins 36 % en poids, il est nécessaire de partir d'une solution d'acide d'environ 24 % en poids. La présente invention permet d'utiliser de l'acide de concentration inférieure à l'azeotrope et évite les inconvénients d'avoir à concentrer les solutions d'HCl et/ou de chlorure ferreux et/ou de chlorure ferrique.

La présente invention consiste à préparer le chlorure ferrique à partir d'acide chlorhydrique dilué et comprend les étapes suivantes :

a) On met en contact du fer avec une solution contenant de l'acide chlorhydrique dilué jusqu'à disparition dudit acide chlorhydrique.

b) On chlore la solution obtenue pour obtenir une solution de chlorure ferrique.

c) On détend la solution obtenue en b).

d) la phase liquide obtenue en c) est partiellement recyclée à l'étape b), l'autre partie constitue la production de chlorure ferrique.

On utilise du fer ou des oxydes de fer ou un mélange de fer et d'oxydes de fer. Il est commode d'utiliser des copeaux de fer tels que des déchets d'usinage de pièces en acier, des copeaux résultant du perçage de pièces en acier ou de résidus d'emboutissage. Ce fer de récupération est plus ou moins oxydé. La solution contenant de l'acide chlorhydrique dilué peut être une solution aqueuse d'acide chlorhydrique contenant entre 15 et 25 % en poids d'acide chlohydrique. On ne sortirait pas du cadre de l'invention en utilisant une concentration supérieure mais il serait dans ce cas beaucoup plus simple d'utiliser un procédé conventionnel tel que décrit dans l'art antérieur. L'invention est particulièrement utile pour les acides dits résiduaires et qu'on ne peut pas concentrer au delà de l'azeotrope. Ces acides ont en général une concentration comprise entre 15 % en poids et l'azeotrope. On ne sortirait pas du cadre de l'invention en utilisant un acide contenant moins de 15 % en poids d'acide chlorhydrique, mais il serait beaucoup plus simple de concentrer cet acide au delà de 15 % par une distillation classique. La solution contenant de l'acide chlorhydrique dilué peut aussi contenir du chlorure ferreux et éventuellement déjà un peu de chlorure ferrique. Cette étape a) peut se faire de façon quelconque mais on opère avantageusement à la pression atmosphérique dans des cuves et on s'arrange pour être toujours en excédent de fer pour être sûr qu'il ne reste pas d'acide chlohydrique dans la solution de chlorure ferreux qu'on obtient en fin de cette étape a). La réaction entre le fer et l'acide chlorhydrique est totale et stoechiométrique. Bien que la solution contenant de l'acide chlorhydrique puisse être à toute température on utilise avantageusement une solution entre 20 et 50°C et de préférence entre 35 et 45°C. Le temps de séjour de l'acide peut être quelconque mais avantageusement il est entre 2 minutes et 30 heures, et de préférence entre 3 et 15 heures. On ne sortirait pas du cadre de l'invention en ajoutant dans cette étape a) en plus d'une solution d'acide chlorhydrique dilué une solution contenant de l'acide chlorhydrique et du chlorure ferreux ou seulement du chlorure ferreux, c'est par exemple une solution provenant d'un bain de décapage. On préfère que la quantité d'une telle solution ne représente pas plus de 20 % et mieux 10 % en poids de la solution d'acide chlorhydrique résiduaire. On ne sortirait pas du cadre de l'invention en utilisant seulement une solution provenant d'un décapage et qui contient $FeCl_2$ et HCl, mais il est nécessaire que cette solution ne contienne pas trop de métaux lourds qui sont gênants pour le chlorure ferrique destiné à préparer l'eau potable. Avant de chlorer la solution obtenue en a) il est avantageux de la filtrer ou de la décanter.

L'étape b) s'effectue par mise en contact de la solution de chlorure ferreux obtenue en a) avec du chlore et une solution de chlorure ferrique. On peut utiliser du chlore liquide ou gazeux ou un fluide contenant du chlore. La mise en contact peut se faire de façon quelconque, il suffit d'assurer le contact entre le chlore et le chlorure ferreux. On peut utiliser un dispositif en plusieurs étages fonctionnant en parallèle ou en série alimentés à co-courant ou à contrecourant ou toute combinaison de ces principes.

On utilise par exemple un réacteur agité ou une colonne du genre colonne à distiller ou colonne d'absorption. On utilise avantageusement une colonne munie de dispositifs de contact tels que des plateaux ou des garnissages d'anneaux ou de plusieurs de ces dispositifs. La solution de chlorure ferreux et la solution de chlorure ferrique alimentent la colonne par le haut et le chlore est introduit en bas de cette colonne. En haut de cette colonne on recueille un peu de chlore si on en a utilisé un excès (par rapport à la quantité de chlorure ferreux), les gaz qui accompagnaient éventuellement le chlore et un peu de vapeur d'eau entraînée par sa tension de vapeur. En bas de la colonne on obtient une solution de chlorure ferrique. On ne sortirait pas du cadre de l'invention en introduisant les solutions de chlorure ferreux et de chlorure ferriques en plusieurs points de la colonne, de même pour le chlore qui peut être introduit en plusieurs points.

La solution de chlorure ferrique obtenue est ensuite détendue puis la phase liquide recueillie dans cette détente est en partie recyclée dans l'étape b), le reste constituant la production de chlorure ferrique. Au cours de la détente on obtient une phase gazeuse essentiellement constituée de vapeur d'eau.

La chloration du chlorure ferreux en chlorure ferrique est totale et stoechiométrique. Avantageusement on respecte un temps de séjour du chlorure ferreux d'au moins 10 secondes, et de préférence inférieur à 4 heures. Il n'est pas nécessaire de chlorer tout le $FeCl_2$, les spécifications du $FeCl_3$ tolèrent parfois de 0,1 à 1 % en poids de $FeCl_2$ dans la solution de chlorure ferrique. On ne sortirait pas du cadre de l'invention en utilisant un excès de chlore.

Avantageusement la température de la solution de chlorure ferreux venant de l'étape a) est comprise entre 40 et 100°C, et de préférence entre 60 et 90°C. La température de la solution de chlorure ferrique recyclée et qui provient de la détente de l'étape c) résulte de la température en sortie de l'étape b) et de la pression à laquelle on détend. Avantageusement cette température du chlorure ferrique recyclé à l'entrée de l'étape b) est comprise entre 50 et 90°C, et de préférence entre 55 et 80°C. La température du chlorure ferreux provenant de l'étape a) de même que la température du chlorure ferrique recyclé en tête de l'étape b) peuvent être modifiées par exemple à l'aide d'échangeurs de chaleur, on préfère utiliser ces solutions sans modifier leur température. La température de la solution de chlorure ferrique en sortie dépend essentiellement des températures des solutions à l'entrée et de la quantité de chlorure ferreux à convertir en chlorure ferrique, mais aussi si l'appareillage utilisé pour effectuer cette étape b) est adiabatique, isotherme,....

On préfère un appareillage adiabatique, la température de sortie de la solution en fin de cette étape b) est avantageusement comprise entre 60 et 95°C, et de préférence 65 et 90°C. Bien qu'on puisse opérer à toute pression il est plus simple d'effectuer cette étape b) à la pression atmosphérique ou à une pression proche et cette solution est détendue de la pression atmosphérique jusqu'à une pression comprise entre 0,3 et 0,05 bar absolus. Cette détente s'effectue dans une capacité quelconque, il suffit seulement qu'on puisse séparer la phase gazeuse et la phase liquide qui en résultent. Le vide est assuré par exemple par une pompe ou un éjecteur à vapeur.

En régime stationnaire la quantité de chlorure ferrique consti tuant la production correspond en nombre de moles à la quantité de chlorure ferreux à l'entrée de l'étape b). La quantité de solution de chlorure ferrique recyclée à l'étape b) est avantageusement comprise entre 5 et 10 fois la quantité de la solution de chlorure ferrique constituant la production en régime stationnaire.

Selon une autre forme de l'invention on peut aussi réchauffer la solution de chlorure ferrique issue de l'étape b) avant de la détendre.

Les échangeurs qui peuvent être installés sur la solution de chlorure ferreux à l'entrée de l'étape b) sur la solution de chlorure ferrique en sortie de l'étape b) et sur la solution de chlorure ferrique recyclé peuvent aussi servir à extraire les calories dans le cas où la réaction devient très exothermique, par exemple si la concentration d'acide chlorhydrique dérive vers des valeurs élevées.

Selon une autre forme préférée de l'invention et pourvu que les niveaux de température soient compatibles on peut transférer les calories de la production de chlorure ferrique vers la solution de chlorure ferreux qui alimente l'étape b).

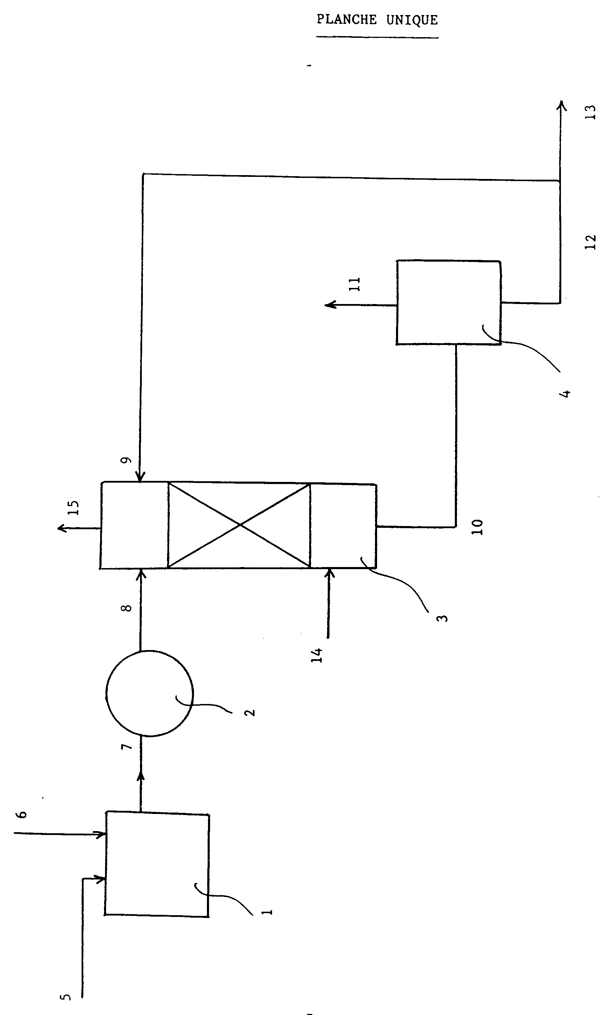

La planche unique représente un mode de réalisation particulier de l'invention. Pour plus de clarté on n'a pas représenté les pompes, les vannes......

(1) représente le bac de mélange du fer (5) avec une solution d'acide chlorhydrique (6). On obtient une solution (7) de chlorure ferreux qu'on filtre sur (2). Le courant de chlorure ferreux alimente en (8) une colonne (3), ainsi qu'une solution de chlorure ferrique (9). Cette colonne est alimentée par un courant de chlore gazeux (14). La solution (10) de chlorure ferrique est détendue dans le pot (4), on obtient une solution (12) de chlorure ferrique qu'on répartit en une production (13) et une partie qu'on recycle (9). Le pot de détente (4) est relié par le tuyau (11) à un éjecteur à vapeur non représenté. On évacue dans le courant (15) les inertes et le chlore éventuellement non réagis.

Les exemples suivants illustrent l'invention sans la limiter.

EXEMPLE 1

On utilise un dispositif conforme à la planche unique ci-jointe dans lequel la colonne 3 est en verre, de diamètre intérieur 0,35 m et présente une hauteur de garnissage de 10 m.

On introduit en 5 une solution contenant 170 kg/h d'acide chlorhydrique dans 680 kg/h d'eau. On a introduit auparavant en 6 une quantité de copeaux de fer largement excédentaire par rapport à la quantité d'HCl. La solution de chlorure ferreux est filtrée puis introduite en 8 dans la colonne 3, sa température est de 70°C. On introduit en 14 un débit de 82,7 kg/h de chlore gazeux et 5 kg/h d'inertes qui se retrouvent dans la sortie 15. La colonne 3 opère à 1,1 bars absolus. La solution du chlorure ferrique à 82°C est amenée par le tuyau 10 dans le pot de détente 4 ou elle est détendue à 0,2 bars, sa température chute à 70°C. En 13 la production est de 379 kg/h de FeCl$_3$ dilués dans 545 kg/h d'eau. On recycle par 9 2272 kg/h de FeCl$_3$ dilués dans 3269 kg/h.

EXEMPLE 2

On opère comme dans l'exemple 1 mais la solution d'acide chlorhydrique est plus diluée, c'est-à-dire 170 kg/h d'HCl dans 963 kg/h d'eau, la température du courant 8 est de 60°C. La solution de chlorure ferrique obtenue en 10 est à 84°C, on la réchauffe à 93°C avant détente à 0,12 bar. Après la détente, on obtient en 13 la même solution concentrée qu'à l'exemple 1 mais à 57°C et on recycle une quantité de 3032 kg/h de FeCl$_3$ dilués par 4360 kg/h d'eau. Cette solution est réchauffée à 75°C avant retour en 9 dans la colonne 3.

**Revendications**

1. Procédé de préparation de chlorure ferrique à partir d'acide chlorhydrique dilué, caractérisé en ce qu'il comprend les étapes suivantes :

a) on met en contact du fer avec une solution contenant de l'acide chlorhydrique dilué jusqu'à disparition dudit acide chlorhydrique,

b) on chlore la solution obtenue pour obtenir une solution de chlorure ferrique,

c) on détend la solution obtenue en b),

d) la phase liquide obtenue en c) est partiellement recyclée à l'étape b), l'autre partie constitue la production de chlorure ferrique.

2. Procédé selon la revendication 1, caractérisé en ce que dans l'étape a) on utilise une solution titrant entre 15 % en poids d'acide chlorhydrique et la composition de l'azeotrope eau-HCl.

3. Procédé selon l'une des revendications 1 ou 2, caractérisé en ce que la quantité de chlorure ferrique recyclée est comprise entre 5 et 10 fois la production.

**Patentansprüche**

1. Verfahren zur Herstellung von Eisen(III)-chlorid, ausgehend von verdünnter Chlorwasserstoffsäure, dadurch gekennzeichnet, daß es folgende Stufen enthält:

a) In Berührung bringen von Eisen mit einer verdünnte Chlorwasserstoffsäure enthaltenden Lösung bis zum Verschwinden der Chlorwasserstoffsäure,

b) Chlorierung der erhaltenen Lösung, um eine Eisen(III)-chloridlösung zu erlangen,

c) Entspannung der in b) erhaltenen Lösung,

d) teilweise Recyclisierung der in c) erhaltenen flüssigen Phase in Stufe b), wobei der andere Teil die Ausbeute an Eisen(III)-chlorid darstellt.

2. Verfahren nach Anspruch 1, dadurch gekennzeichnet, daß man in der Stufe a) eine Lösung verwendet, deren Gehalt an Chlorwasserstoffsäure zwischen 15 Gew.% und der Zusammensetzung des Azeotrops Wasser-HCl beträgt.

3. Verfahren nach einem der Ansprüche 1 oder 2, dadurch gekennzeichnet, daß die Menge des recyclisierten Eisen(III)-chlorids zwischen dem 5- und 10-fachen der Ausbeute liegt.

**Claims**

Process for the preparation of ferric chloride from dilute hydrochloric acid, characterised in that it comprises the following steps:

a) iron is placed in contact with a solution containing dilute hydrochloric acid until the said hydrochloric acid has disappeared,

b) the solution obtained is chlorinated to obtain a solution of ferric chloride,

c) the solution obtained in b) is decompressed,

d) the liquid phase obtained in c) is partially recycled to step b) ; the remaining part forms the ferric chloride output.

2. Process according to Claim 1, characterised in that a solution analysing by titration between 15% by weight of hydrochloric acid and the composition of the water-HCl azeotrope is employed in step a).

3. Process according to either of Claims 1 and 2, characterised in that the quantity of ferric chloride which is recycled is between 5 and 10 times the output.

PLANCHE UNIQUE